# EUROPÄISCHE PATENTANMELDUNG

(11) **EP 2 392 494 A2**
(43) Veröffentlichungstag der Anmeldung: **07.12.2011**
(21) Anmeldenummer: 11168847.9
(22) Anmeldetag: 06.06.2011
(51) Int. Cl.: B60Q 1/26, E06B 7/14

(54) **Schutzscheibe für Warnbalken**

(30) Priorität: 06.06.2010 DE 102010017248
(71) Anmelder: Pintsch Bamag Antriebs- und Verkehrstechnik GmbH, 46537 Dinslaken (DE)
(72) Erfinder: Boscher, Guido, 47906 Kempen (DE)
(74) Vertreter: CBDL Patentanwälte

(57) **Zusammenfassung**

Der Erfindung liegt die Aufgabe zugrunde, eine Schutzscheibe für Warnbalken anzugeben, bei welcher Beeinträchtigungen der Ablesbarkeit einer von der Schutzscheibe geschützten Anzeigeeinheit wie z.B. eines Lochmatrixdisplays, durch Kondenswasserbildung weitestgehend vermieden sind.

Es wird eine Schutzscheibe (10) vorgeschlagen, die einen Abschnitt (12) erster Art zur Abdeckung einer Anzeigeeinheit umfaßt und bei der außerhalb des Hauptsichtfeldes auf die von der Schutzscheibe zu schützende Anzeigeeinheit wenigstens eine Sollkondenszone vorgesehen ist, wobei jede Sollkondenszone von einem Abschnitt (14, 16) zweiter Art gebildet wird, der eine Materialdicke aufweist, die geringer ist als die Materialdicke im Bereich des Abschnittes erster Art.

## Beschreibung

### TECHNISCHES GEBIET DER ERFINDUNG

Die Erfindung betrifft eine Schutzscheibe für Warnbalken von Fahrzeugen und einen Warnbalken, der mit einer solchen Schutzscheibe ausgestattet ist.

### HINTERGRUND DER ERFINDUNG

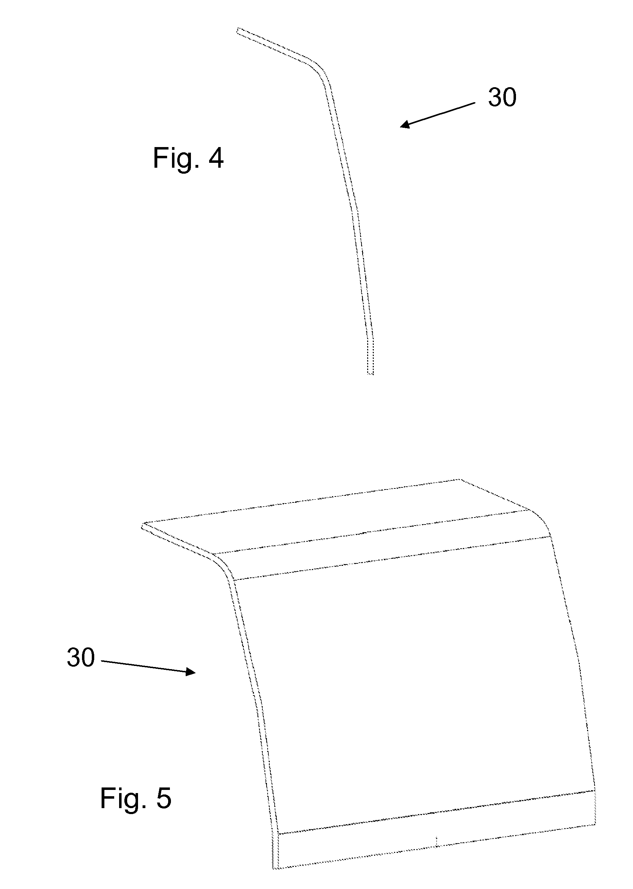

Auf dem Gebiet der Erfindung sind Schutzscheiben bekannt, wie sie in den Figuren 4 und 5 gezeigt werden. Sie dienen dazu, Lochmatrixdisplays und andere Anzeigeeinheiten, wie sie bei Warnbalken für Einsatzfahrzeuge und Endstationsanzeigen z.B. von Straßenbahnen verwendet werden, vor Umwelteinflüssen zu schützen. Sie bestehen in der Regel aus einem durchgängig gebogenen oder abgewinkelten Profil, das eine einheitliche Materialdicke besitzt.

Bei den bekannten Schutzscheiben besteht das Problem, das sich unter bestimmten Witterungsbedingungen an nicht vorherbestimmbaren Bereichen Kondenswasser bildet, das die Ablesbarkeit der von der Schutzscheibe eigentlich zu schützenden Anzeigeeinheit merklich beeinträchtigen kann. Dies ist insbesondere dann nachteilig, wenn auf der Anzeigeeinheit Text wie z.B. "Polizei - bitte folgen" o.dgl. angezeigt wird, der gut lesbar sein soll.

### OFFENBARUNG DER ERFINDUNG

Der Erfindung liegt die Aufgabe zugrunde, eine Schutzscheibe der eingangs genannten Art anzugeben, bei welcher Beeinträchtigungen der Ablesbarkeit einer von der Schutzscheibe geschützten Anzeigeeinheit durch Kondenswasserbildung weitestgehend vermieden sind.

Die Aufgabe wird gelöst von einer Schutzscheibe für Warnbalken, die einen Abschnitt erster Art zur Abdeckung einer Anzeigeeinheit umfaßt und bei der außerhalb des Hauptsichtfeldes auf die von der Schutzscheibe zu schützende Anzeigeeinheit wenigstens eine Sollkondenszone vorgesehen ist , wobei jede Sollkondenszone von einem Abschnitt zweiter Art gebildet wird, der eine Materialdicke aufweist, die geringer ist als die Materialdicke im Bereich des Abschnittes erster Art. Vorteilhafte Ausgestaltungen und Weiterbildungen sind Gegenstand der Unteransprüche. Der nebengeordnete Anspruch 12 betrifft einen Warnbalken, der mit einer erfindungsgemäßen Schutzscheibe ausgestattet ist.

Die Erfindung beruht auf der überraschenden Erkenntnis, daß es auf einfache und kostengünstige Weise ohne Zusatzheizungen, Ventilatoren oder ähnliche Mittel allein durch entsprechende Formgebung der Schutzscheibe möglich ist, das Hauptsichtfeld auf die schützende Anzeigeeinheit, also den Bereich, der bei Benutzung der Anzeigeeinheit hauptsächlich gut erkennbar, also z.B. von vorausfahrenden oder nachfolgenden Fahrzeugen ablesbar sein soll, frei von Kondenswasser zu halten.

Weitere Einzelheiten und Vorteile der Erfindung ergeben sich aus der nachfolgenden rein beispielhaften und nicht-beschränkenden Beschreibung eines Ausführungsbeispiels in Verbindung mit der Zeichnung.

### KURZE BESCHREIBUNG DER ZEICHNUNGEN

Fig. 1 zeigt eine Seitenansicht eines Ausführungsbeispiels einer erfindungsgemäßen Schutzscheibe.
Fig. 2 zeigt eine erste perspektivische Darstellung eines kurzen Stücks einer erfindungsgemäßen Schutzscheibe gemäß Fig. 1.
Fig. 3 zeigt eine zweite perspektivische Darstellung des Stücks gemäß Fig. 2.
Fig. 4 zeigt eine Seitenansicht einer Schutzscheibe gemäß dem Stand der Technik.
Fig. 5 zeigt eine perspektivische Darstellung eines kurzen Stücks einer Schutzscheibe des Standes der Technik gemäß Fig. 4.

### BESCHREIBUNG EINER BEVORZUGTEN AUSFÜHRUNGSFORM

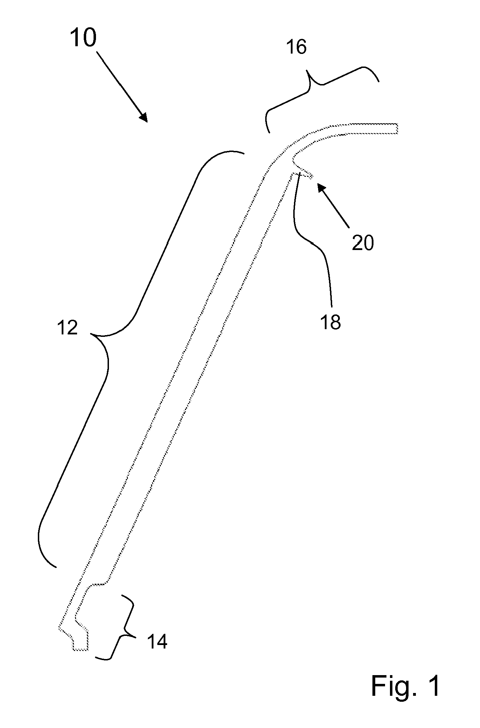

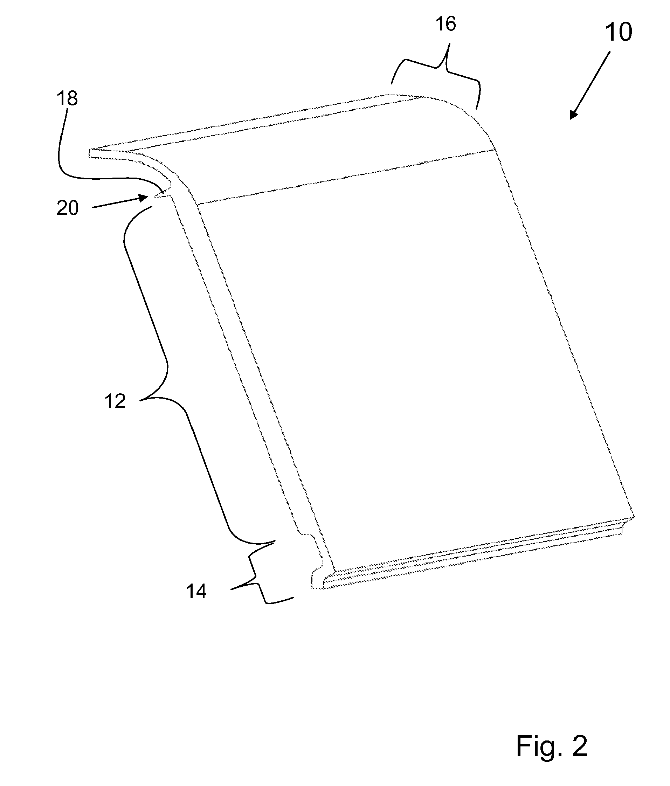

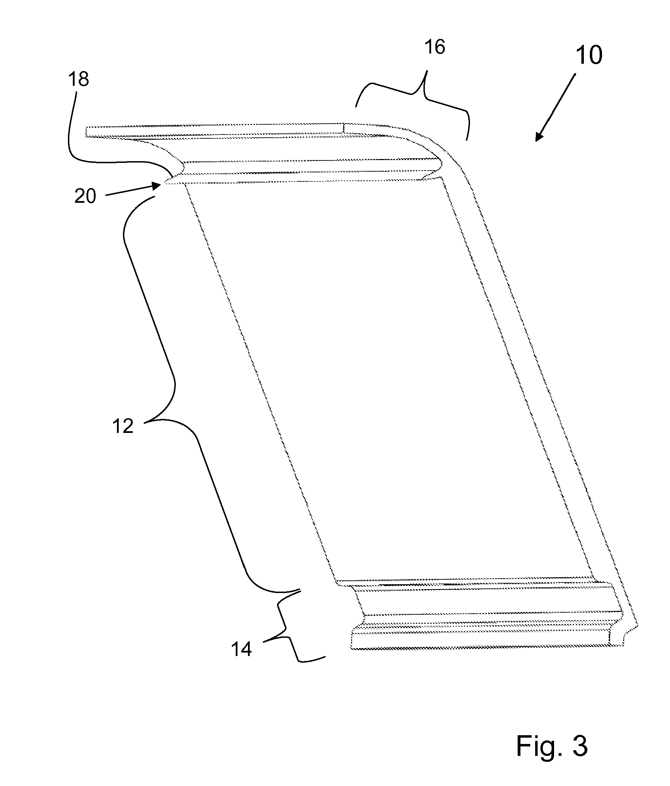

In den Fig. 1 bis 3 ist eine erfindungsgemäße Schutzscheibe in verschiedenen Ansichten gezeigt, wobei darauf hingewiesen sei, daß in den Fig. 2 und 3 lediglich ein kurzes Stück einer solchen Schutzscheibe dargestellt ist. Im Regelfall, also bei der Verwendung einer erfindungsgemäßen Schutzscheibe zur Abdeckung einer Anzeigeeinheit wie z.B. eines Lochmatrixdisplays bei einem Warnbalken für Einsatzfahrzeuge von Polizei und Feuerwehr, ist die Schutzscheibe deutlich länger als das in den Fig. 2 und 3 gezeigte Stück. Dabei sei an dieser Stelle darauf hingewiesen, daß die erfindungsgemäße Schutzscheibe auch bei anderen Anzeigevorrichtungen, bei denen die gleiche Problematik (hinreichende Stabilität gegen Kräfte bei schnellen Bewegungen, Ausbildung von die Lesbarkeit beeinträchtigendem Kondenswasser) eingesetzt werden kann, insbesondere also Endstationsanzeigen von Fahrzeugen des öffentlichen Personennahverkehrs wie S-Bahnen, Bussen und Straßenbahnen.

Die in ihrer Gesamtheit mit 10 bezeichnete Schutzscheibe weist bei diesem Ausführungsbeispiel einen Abschnitt 12 erster Art auf, der zur Abdeckung einer Anzeigeeinheit, wie insbesondere eines Lochmatrixdisplays, vorgesehen ist.

Die Schutzscheibe 10 weist darüber hinaus zwei Abschnitte 14 und 16 zweiter Art auf, wobei die Materialdicke in den Bereichen der Abschnitte 14 und 16 zweiter Art geringer ist als im Bereich des Abschnittes 12 erster Art. Es hat sich überraschend gezeigt, daß diese erfindungsgemäße Ausgestaltung bewirkt, daß sich Kondenswasser praktisch ausschließlich in den Bereichen 14 und 16 zweiter Art bildet, da diese aufgrund der geringeren Materialdicke weniger Wärme speichern, schneller auskühlen und somit Sollkondensflächen bilden.

Die Bereiche zweiter Art sind dabei so angeordnet, daß sie im bestimmungsgemäßen Montagezustand der Schutzscheibe nicht im Bereich des Sichtfeldes auf die von der Schutzscheibe zu schützende Anzeigeeinheit liegen.

Bei dem gezeigten Ausführungsbeispiel verlaufen die beiden Abschnitte zweiter Art im wesentlichen parallel zueinander entlang der beiden Längsseiten der Schutzscheibe 10 und damit im bestimmungsgemäßen Montagezustand der Schutzscheibe im wesentlichen horizontal. Alternativ oder zusätzlich können weitere Bereiche zweiter Art vorgesehen sein, die im bestimmungsgemäßen Montagezustand der Schutzscheibe z.B. links und rechts neben einer zu schützenden Anzeigeeinheit von oben nach unten verlaufen.

Vorteilhaft kann vorgesehen sein, daß zumindest einer der Abschnitte zweiter Art eine Ablaufrinne für Kondenswasser bildet. Bei einer mit einer solchen Schutzscheibe versehenen Anzeigevorrichtung wie insbesondere einem Warnbalken kann dann im Bereich der Mündung der Ablaufrinne ein Auslaß für Kondenswasser vorgesehen sein.

Im bestimmungsgemäßen Montagezustand der Schutzscheibe 10 ist der Abschnitt 16 zweiter Art oberhalb des Abschnittes 12 erster Art angeordnet und verläuft in einem geringeren Winkel zur Horizontalen als der Abschnitt 12 erster Art. Dies erlaubt unter anderem eine materialsparende Bauweise, da die bei schneller Fahrt eines Einsatzfahrzeuge auf die Schutzscheibe wirkenden Kräfte eine Mindestdicke im Bereich der dem Fahrtwind direkt ausgesetzten Teile der Scheibe, im gezeigten Beispiel also des Abschnittes 12 bedingen, während ein praktisch horizontal verlaufender Abschnitt wie der Abschnitt 16 diese Mindestdicke nicht aufweisen muß. Besäße der Abschnitt 16 die gleiche Neigung wie der Abschnitt 12, bestimmte er die Mindestdicke und der Abschnitt 12 müßte, um den gewünschten Effekt unterschiedlicher Wärmespeicherung zu erzielen, unnötig dick sein.

Wie insbesondere in den Fig. 1 und 2 gut zu erkennen, ist bei dem gezeigten Ausführungsbeispiel im Übergangsbereich des Abschnittes 16 zweiter Art und des Abschnittes 12 erster Art ein Abtropfprofil 18 ausgebildet, dessen freies Ende eine Abtropfkante 20 bildet. Diese Ausgestaltung bewirkt vorteilhaft, daß im Bereich des Abschnittes 16 gebildetes Kondenswasser über die Abtropfkante abtropfen kann, ohne dabei auf den Abschnitt 12 zu gelangen. Da der Abschnitt 12 im bestimmungsgemäßen Montagezustand der Schutzscheibe schräg zu einer (gedachten) durch die Abtropfkante verlaufenden senkrechten Ebene verläuft, so daß sich der Abschnitt 12 von oben nach unten immer mehr von dieser senkrechten Ebene entfernt, ist sichergestellt, daß auch bei bewegten Schutzscheiben, also z.B. bei der Schutzscheibe eines Warnbalkens eines fahrenden Einsatzfahrzeuges, abtropfendes Kondenswasser nicht auf den Abschnitt 12 gelangen kann.

Die Abschnitte 14 und 16 zweiter Art können vorteilhaft eine Doppelfunktion übernehmen und einerseits Sollkondenszonen bilden, anderer zur Befestigung der Schutzscheibe an einem Warnbalken dienen. Beim gezeigten Ausführungsbeispiel wirkt das freie Ende des Abschnittes 14 mit einer dazu zumindest partiell komplementären Aufnahme an einem Warnbalken zur Befestigung der Schutzscheibe zusammen. Auch das freie Ende des Abschnittes 16 dient zur Befestigung der Schutzscheibe.

Die gezeigte Schutzscheibe 10 besteht aus zumindest partiell transparentem Kunststoff und ist vorteilhaft einstückig ausgebildet.

Die Fig. 4 und 5 zeigen eine in ihrer Gesamtheit mit 30 bezeichnete Schutzscheibe gemäß dem Stand der Technik. Die Schutzscheibe besitzt durchgängig die gleiche Materialdicke, so daß sich Kondenswasser an willkürlichen Stellen bildet, was die Ablesbarkeit einer von der Schutzscheibe geschützten Anzeigeeinheit beeinträchtigen kann.

Im Rahmen des Erfindungsgedankens sind zahlreiche Abwandlungen und Weiterbildungen möglich, die sich zum Beispiel auf die Anzahl und Ausgestaltung der Abschnitte erster und zweiter Art beziehen. So ist es z.B. möglich und je nach Ausgestaltung der zu schützenden Anzeigeeinheiten auch sinnvoll, zwei oder mehr Abschnitte erster Art vorzusehen und diese durch von Abschnitten zweiter Art gebildeten Sollkondenszonen zu trennen. Auch kann die Schutzscheibe so ausgebildet werden, daß sie bei Anzeigevorrichtungen, die einerseits hinreichende Stabilität gegen Kräfte bei schnellen Bewegungen besitzen müssen, andererseits mit dem Problem der die Lesbarkeit beeinträchtigendem Kondenswasserbildung behaftet sind, eingesetzt werden kann, insbesondere also Endstationsanzeigen von Fahrzeugen des öffentlichen Personennahverkehrs wie S-Bahnen, Bussen und Straßenbahnen. Schließlich kann vorgesehen sein, anstelle der gezeigten und beschriebenen mehreren Sollkondenszonen nur eine Sollkondenszone auszubilden.

## Patentansprüche

1. Schutzscheibe (10) für Warnbalken, umfassend einen Abschnitt (12) erster Art zur Abdeckung einer Anzeigeeinheit,
**dadurch gekennzeichnet,**
- **daß** außerhalb des Hauptsichtfeldes auf die von der Schutzscheibe zu schützende Anzeigeeinheit wenigstens eine Sollkondenszone (14, 16) vorgesehen ist und
- **daß** jede Sollkondenszone von einem Abschnitt (14, 16) zweiter Art gebildet wird, der eine Materialdicke aufweist, die geringer ist als die Materialdicke im Bereich des Abschnittes erster Art.

2. Schutzscheibe (10) nach Anspruch 1, **dadurch gekennzeichnet, daß** im Übergangsbereich eines Abschnittes (16) zweiter Art und eines Abschnittes erster Art ein Abtropfprofil (18) ausgebildet ist.

3. Schutzscheibe (10) nach Anspruch 2, **dadurch gekennzeichnet, daß** das Abtropfprofil (18) eine Abtropfkante (20) bildet.

4. Schutzscheibe (10) nach Anspruch 3, **dadurch gekennzeichnet, daß** der Abschnitt (12) erster Art im bestimmungsgemäßen Montagezustand der Schutzscheibe schräg zu einer durch die Abtropfkante (20) verlaufenden senkrechten Ebene verläuft.

5. Schutzscheibe (10) nach einem der Ansprüche 1 bis 4, **dadurch gekennzeichnet, daß** zwei Abschnitte (14, 16) zweiter Art vorgesehen sind, die sich im wesentlichen parallel zueinander an zwei gegenüberliegenden Seiten der Schutzscheibe erstrecken.

6. Schutzscheibe (10) nach Anspruch 5, **dadurch gekennzeichnet, daß** die zwei im wesentlichen parallel zueinander verlaufenden Abschnitte (14, 16) zweiter Art im bestimmungsgemäßen Montagezustand der Schutzscheibe im wesentlichen horizontal verlaufen.

7. Schutzscheibe nach einem der Ansprüche 1 bis 6, **dadurch gekennzeichnet, daß** wenigstens ein Abschnitt zweiter Art vorgesehen ist, der im bestimmungsgemäßen Montagezustand der Schutzscheibe von oben nach unten verläuft.

8. Schutzscheibe nach einem der Ansprüche 1 bis 7, **dadurch gekennzeichnet, daß** wenigstens ein Abschnitt zweiter Art eine Ablaufrinne für Kondenswasser bildet.

9. Schutzscheibe (10) nach einem der Ansprüche 1 bis 8, **dadurch gekennzeichnet, daß** wenigstens ein Abschnitt (14, 16) zweiter Art zur Befestigung der Schutzscheibe an einem Warnbalken ausgebildet ist.

10. Schutzscheibe (10) nach einem der Ansprüche 1 bis 9, **dadurch gekennzeichnet, daß** die Schutzscheibe einstückig ausgebildet ist.

11. Schutzscheibe (10) nach einem der Ansprüche 1 bis 10, **dadurch gekennzeichnet, daß** sie aus transparentem Kunststoff besteht.

12. Warnbalken für Einsatzfahrzeuge, **dadurch gekennzeichnet, daß** er wenigstens eine Schutzscheibe (10) nach einem der Ansprüche 1 bis 11 aufweist.
